(19) Europäisches Patentamt
European Patent Office
Office européen des brevets

(11) Publication number: **0 351 232 A2**

(12) # EUROPEAN PATENT APPLICATION

(21) Application number: 89307163.9

(22) Date of filing: 14.07.89

(51) Int. Cl.5: B 62 B 5/06

(30) Priority: 15.07.88 GB 8816880

(43) Date of publication of application: 17.01.90 Bulletin 90/03

(84) Designated Contracting States: DE ES FR GB

(71) Applicant: BUKO LIMITED
Ashley Road Southfield
Glenrothes Fife KY6 2SE Scotland (GB)

(72) Inventor: Willmitt, Kenneth George
Willow Cottage Melville Road
Ladybank Fife (GB)

(74) Representative: Arthur, John William et al
FITZPATRICKS 4 West Regent Street
Glasgow G2 1RS Scotland (GB)

(54) **Device for fitting handles or handlebars to trolleys.**

(57) A trolley handle or handlebar fitting device comprising an insert 2 for fitting in a wire U-end 14 of the trolley, and a support body 7 in the form of a sheath for receiving the U-end 14 and the insert 2, the sheath 7 having a socket 8 for receiving an end 1′ of a tubular handlebar 1 wherein there is provided across-bar 13 within the sheath socket 8 to which the handlebar end 1′ is engaged via a bayonet type connector 9 on the end 1 of the handlebar 1, and wherein the insert 2 provides a spring clip 11 which is received in locking engagement with the handlebar end 1′ when inserted into the sheath 7.

Fig. 1

EP 0 351 232 A2

## Description

### Device for fitting Handles or Handlebars to Trolleys

The present invention relates to a device which facilitates the fitting of handles or handlebars to trolleys made at least partly of wire construction.

Shopping trolleys for use in supermarkets or the like conventionally comprise a basket of wire construction mounted on a tubular sub-frame carrying castor wheels, with a handlebar fitted to the basket at the rear of the trolley. In practice, it has been found that shopping trolleys tend to suffer from vandalism, and that the handlebar may be fairly readily disassembled from the trolley. In fact it is being found that such handlebars are on occasions being used as offensive weapons.

Devices for fitting handlebars to trolleys are already known, e.g. that disclosed in GB 2,014,527 B. However, to date such devices have suffered from the disadvantage that the handlebar may be relatively easily disengaged from the trolley by a determined vandal.

Accordingly, the primary object of the present invention is to provide a device for fitting a handlebar to a trolley which facilitates not only securing of the handlebar to the trolley in a relatively simple manner but once in position is virtually impossible or very difficult to remove from the trolley.

The present invention broadly provides a device for fitting a handle or handlebar to a trolley, the device comprising an insert for fitting in a wire U-end of a trolley, and a support body in the form of a sheath for receiving the U-end and the insert, the sheath having a socket for receiving an end of a tubular handlebar, further providing a protuberance on the insert intended to be received in locking engagement with the handlebar when inserted into the sheath.

Preferably there is provided a cross-bar within the sheath socket to which the handlebar is engaged via a bayonet type socket on the end of the handlebar.

Preferably also, the protuberance on the insert is made from a suitable metal such that when the insert is received into locking engagement with the handlebar when inserted into the sheath, a metal-to-metal contact is made between the protuberance and the handlebar.

Preferably also, the protuberance on the insert comprises a spring type clip or clips which snap-fit into the handlebar end via bar axial ends slots provided by the bayonet type connector.

An embodiment of the device according to the present invention will now be described by way of example only with reference to the accompanying drawings in which:

Fig. 1 is a perspective "exploded" view from above, and to one side, of a support body and insert of a handle bar fitting device according to the invention along with a U-end and a handlebar having a bayonet type socket at one end;

Fig. 2 is a perspective view from above, and to one side, of the insert of Fig. 1 (to an enlarged scale);

Fig. 3 is a partial perspective view from above, and to the other side, of the insert of Fig. 2, (to an enlarged scale);

Fig. 4 is a perspective view from below, and to one side, of the insert of Fig. 2 (to a reduced scale);

Fig. 5 is a partial "transparent" perspective view from above and to one side of the support body of Fig. 5 (to an enlarged scale);

Fig. 6 is a cross-sectional perspective view along the longitudinal axis from above and to one side of the support body of Fig. 1 (to an enlarged scale), showing the device in the assembled condition with the insert installed and the handlebar in position.

Referring to the drawings, 1′ denotes one end portion of a tubular handlebar 1 of a shopping trolley (not illustrated) which comprises, as is customary, a wire-formed basket supported on a tubular sub-frame carrying castor wheels. The basket is provided with a pair of rearwardly projecting wire U-ends 14 at each side of the basket formed from wire portions, the U-ends 14 being secured to the handlebar 1 in the manner which will now be described.

An insert 2, made from a resilient plastic material, has in each of opposed longitudinal edges at the inserts periphery a groove 3 merging at one end 4 of the insert 2 to provide a channel-shaped groove for reception of the wire U-end 14. The insert 2 located in the U-end 14 is adapted to fit into a support body 7. Thus, on one face of the insert 2 is a longitudinal protuberance formation 5 including a guide block 5′ intended to mate with a correspondingly shaped groove 6 in the support body 7.

On the same face of the insert 2 is provided a further element 10 of the protuberance 5 at the outer end 4 of the insert 2. The further element 10 is adapted to hold a metal spring clip 11 of general Y form of the protuberance formulation such that the Y-ends 12 of the spring clip 11 are positioned close to the longitudinal block 5, the remaining leg 11A being held in the element 10.

The support body 7 is in the form of a sheath and is made from either an elastically deformable moulded plastic material or from a resilient plastic material. The sheath 7 is double-limbed, one limb being intended to receive the insert 2, and the other limb having an annular socket 8 for reception of the handlebar end 1.

Provided within the annular socket 8 is a cross-bar 13 made from a resilient plastic material. The end 1′ of the handlebar 1 inserted into the annular socket 8 has a bayonet type socket 9 through which the cross-bar 13, and the insert 2 inserted into the sheath 7 such that the spring clip 11 engages and retains the handle bar 1 by means of the axial end slots 9A provided on the bar 1 by the bayonet type socket 9. The cross-bar 13 ensures that the aperture portion 9A of the socket 9 is correctly aligned to receive the protuberance formulation 5.

To fit the handlebar 1 onto the trolley, the insert 2 is fitted into one of the pair of U-ends 14 with the U-ends 14 being seated in the channel 3, 4. The end 1′ of the handlebar 1 is inserted into the sheath 7 through the socket 8.

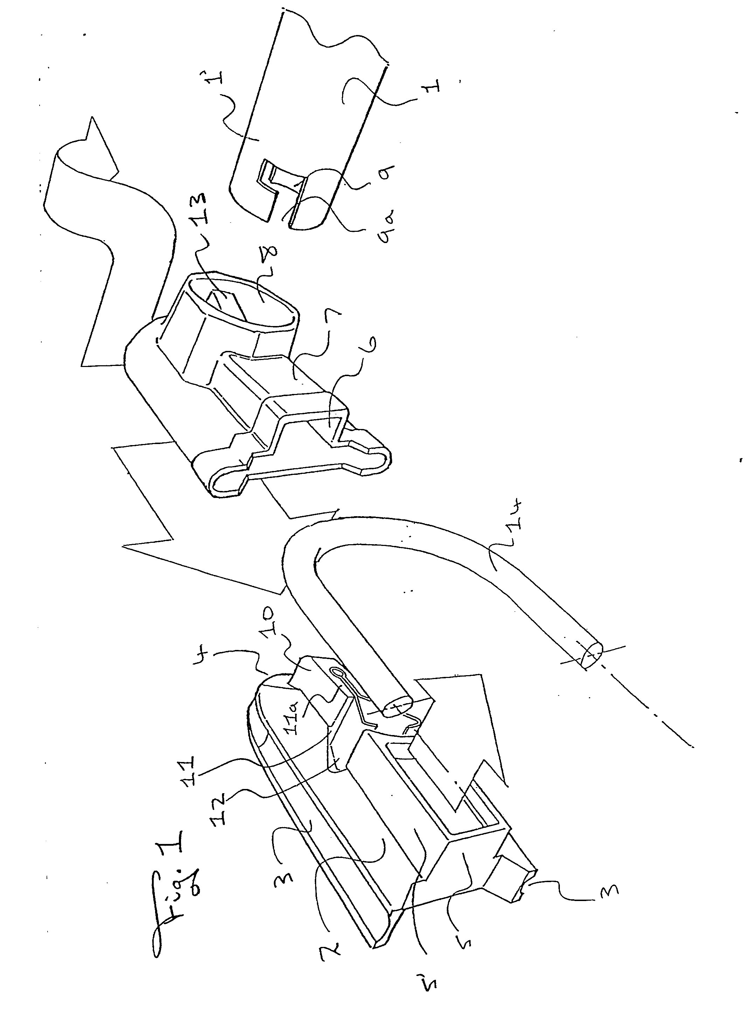

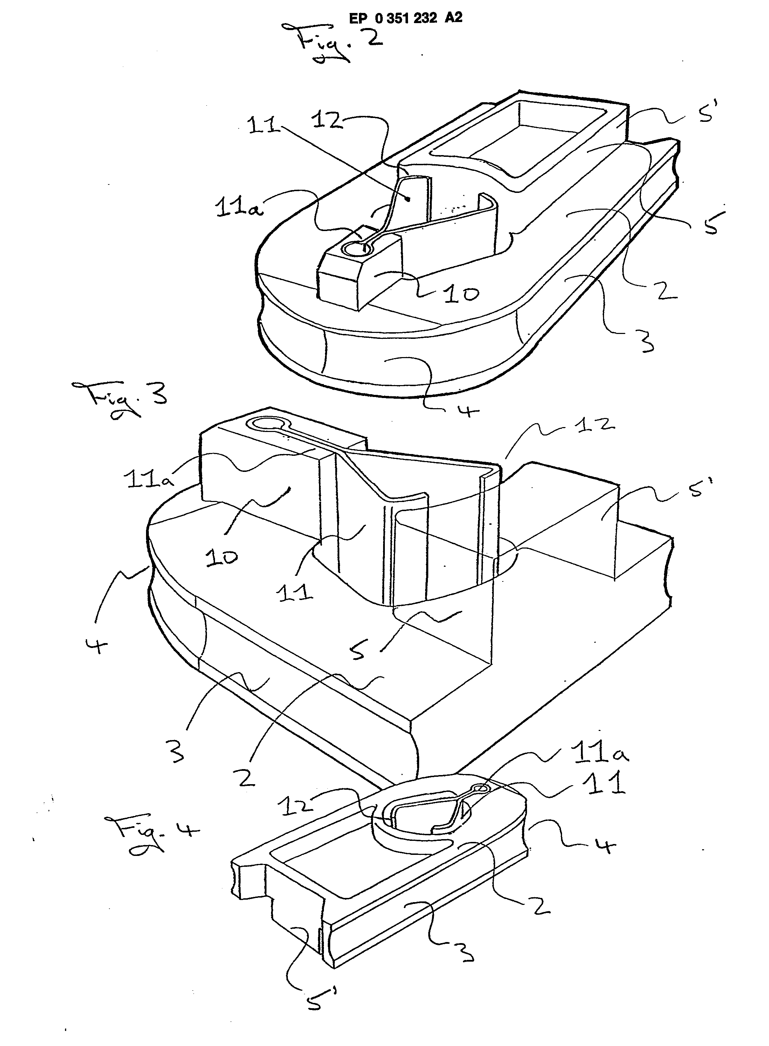

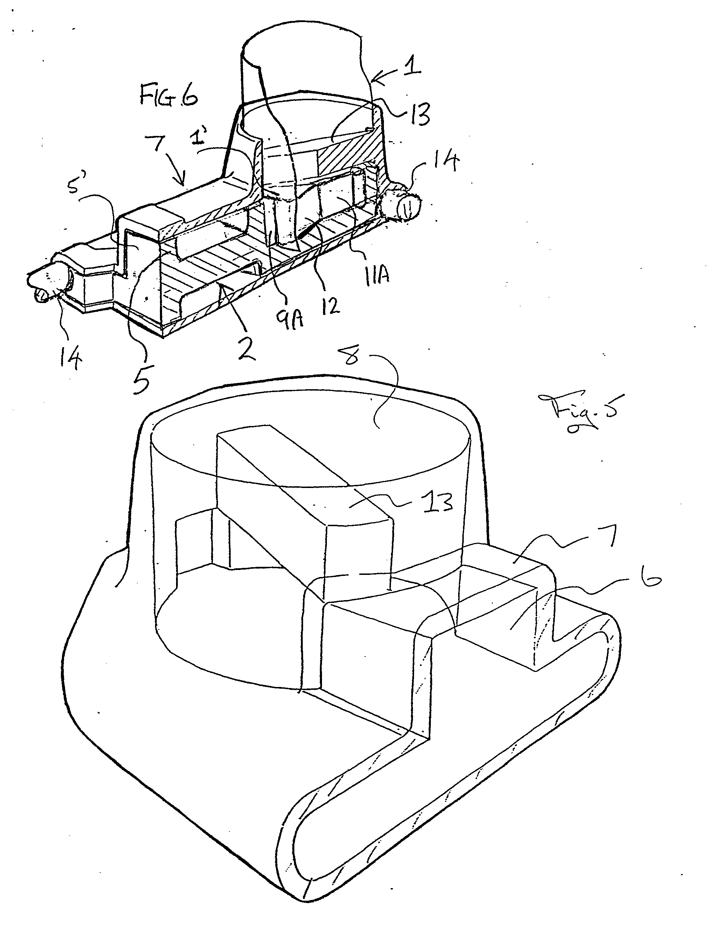

The handlebar 1 is then rotated (anti-clockwise in the embodiment shown in Fig. 1) with respect to the sheath 7 or the sheath 7 rotated (clockwise in the embodiment shown in Fig. 1) in order that the handlebar end 1′ engages the cross-bar 13. The insert 2 with attached U-end 14 is then pushed into the sheath 7, such that the spring clip 11 passes through the aperture portion 9A of the socket 9 in the handlebar end 1, and since the insert is resilient the spring clip 11 will snap into the interior of the handlebar end 1′.

The cross-bar 13 and also the element 10 provide an anti-rotation function, while the spring-clip 11 prevents disassembly of the handle 1 from the sheath 7. The cross-bar 13 further provides an anti-pull off function. Thus, unauthorised removal of the handle 1 from the shopping trolley is virtually impossible.

The illustrated embodiment of the invention provides a device for fitting a handle or handlebar to a trolley, the device being particularly simple to assemble and further being very difficult to disassemble once in place.

It will be appreciated however, that other modifications may be made within the scope of the invention, and that the device may be used to securely fit any tubular handle to any trolley of a wire construction, not only shopping trolleys as used in supermarkets.

**Claims**

1. A device for fitting handles or handlebars to trolleys comprising an insert (2) for fitting in a wire U-end (14) of a trolley, and a support body (7) in the form of a sheath for receiving the U-end (14) and the insert (2), the sheath having a socket (8) for receiving an end (1′) of a tubular handlebar (1) characterised in that the insert (2) provides a protuberance (11) which is received in locking engagement with the handlebar end (1) when inserted into the sheath (7) the handlebar (1) being suitably adapted to engage the protuberance (11).

2. A device as claimed in claim 1, characterised in that the protuberance (11) passes through an end aperture (9A) in the handlebar (1), and in that means (13, 9) are provided to position the said end aperture (9A) for reception of the protuberance (11) when the handlebar (1) is fitted into the socket (8) of the support body (2).

3. A device as claimed in claim 1 or 2, characterised in that holding means (13) engage with the handlebar (1) to restrain relative movement between the handlebar (1) and the support body (7) in the axial direction of the handlebar (1).

4. A device as claimed in claim 2 or 3 characterised in that a cross-bar (13) is provided within the sheath socket (8) to which the handlebar (1) is engaged via a bayonet type socket (9) on the end (1′) of the handlebar (1).

5. A device as claimed in any one of the preceding claims characterised in that the protuberance (11) on the insert (2), is made from a suitable metal such that when the insert (2) is received into the locking engagement with the handlebar (1) when inserted into the sheath (7), a metal-to-metal contact is made between the protuberance (11) and the handlebar (1).

6. A device as claimed in claim 5 characterised in that the protuberance (11) on the insert (2) comprises a spring type clip or clips which snap-fit into the handlebar end (1′) via bar axial end slots (9A) provided by the bayonet type socket (9).

7. A device as claimed in claim 6, characterised in that the spring clip (11) is of general Y-form, the forks (12) of the Y being deformable to facilitate snap-fitting of the spring clip (11) into the handlebar end (1′), the other limb (11A) of the clip (11) being held in a holding element (10) of the protuberance.

8. A device as claimed in claim 7, characterised in that the holding element (10) extends through a second aperture (9A) in the handlebar end (1′) when the device is in the assembled, handlebar holding condition.

9. A device as claimed in any one of the preceding claims, characterised in that the protuberance includes a guide block (5) for location in a complementary shaped housing (6) in the support body (2).

10. A device as claimed in any one of the preceding claims, characterised in that the support body (7) and the insert (2) are made from plastics material.

Fig. 1
1'
1
9
9a
13
8
7
6
14
10
4
11a
11
12
3
2
5
3

Fig. 2
11
12
11a
10
5'
5
2
3
4
Fig. 3
12
11a
10
11
5'
5
4
3
2
Fig. 4
11a
11
12
4
2
3
5'

FIG.6
1
13
14
7
1'
5'
11A
12
9A
2
14
5
8
Fig.5
13
7
6